(19) Europäisches Patentamt
European Patent Office
Office européen des brevets

(11) EP 1 821 122 A1

(12) # EUROPEAN PATENT APPLICATION
published in accordance with Art. 158(3) EPC

(43) Date of publication:
**22.08.2007 Bulletin 2007/34**

(21) Application number: **05809398.0**

(22) Date of filing: **24.11.2005**

(51) Int Cl.:
*G02B 5/30* (2006.01) *C08F 210/00* (2006.01)
*C08F 232/08* (2006.01) *C08L 45/00* (2006.01)

(86) International application number:
**PCT/JP2005/021599**

(87) International publication number:
**WO 2006/057309 (01.06.2006 Gazette 2006/22)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.11.2004 JP 2004340874**
**24.02.2005 JP 2005049390**
**06.05.2005 JP 2005135271**

(71) Applicant: **SEKISUI CHEMICAL CO., LTD.**
**Osaka-shi,**
**Osaka 530-8565 (JP)**

(72) Inventors:
- **HIRAIKE, Hiroshi**
  **c/o Sekisui Chemical Co., Ltd.**
  **Osaka 618-8589 (JP)**
- **SAWADA, Takahiko**
  **c/o Sekisui Chemical Co., Ltd.**
  **Osaka 618-8589 (JP)**
- **YAGI, Kazunari**
  **c/o Sekisui Chemical Co., Ltd.**
  **Osaka 618-8589 (JP)**
- **HIGUCHI, Isao**
  **c/o Sekisui Chemical Co., Ltd.**
  **Osaka 618-8589 (JP)**
- **TOYOSHIMA, Katsunori**
  **c/o Sekisui Chemical Co., Ltd**
  **Osaka 618-8589 (JP)**
- **MORITA, Takeharu**
  **c/o Sekisui Chemical Co., Ltd.**
  **Osaka 618-8589 (JP)**
- **NOZATO, Shoji**
  **c/o Sekisui Chemical Co., Ltd.**
  **Osaka 618-8589 (JP)**
- **TAKAENOKI, Yoshihiro**
  **c/o Sekisui Chemical Co., Ltd**
  **Osaka 618-8589 (JP)**
- **NAKAMURA, Takehiro**
  **c/o Sekisui Chemical Co., Ltd.**
  **Osaka 618-8589 (JP)**
- **HATKE, Wilfried**
  **D-65779 Kelkheim (DE)**
- **BRUCH, Matthias**
  **D-64546 Moerfelden-Walldorf (DE)**
- **SCHAUWIENOLD, Anne-Meike**
  **D-65719 Hofheim (DE)**
- **STEHLING, Udo, Manfred**
  **D-61462 Koenigstein im Taunus (DE)**
- **KANAI, Hiroyuki**
  **c/o POLYPLASTICS CO., LTD.**
  **Fuji-shi, Shizuoka 416-8533 (JP)**
- **SERIZAWA, Hajime**
  **c/o POLYPLASTICS CO., LTD.**
  **Fuji-shi, Shizuoka 416-8533 (JP)**

(74) Representative: **Hart Davis, Jason et al**
**Cabinet Beau de Loménie,**
**158, rue de l'Université**
**75340 Paris Cedex 07 (FR)**

(54) **RETARDATION FILM**

(57) It is the object of the present invention to provide a retardation film comprising a norbornene type copolymer, being excellent in heat resistance, low specific gravity, low birefringence, low photoelasticity, and low chromatic dispersion and having high performance of retardation compensation.

The present invention is a retardation film, which comprises a norbornene type copolymer composition containing a norbornene type copolymer containing 40 to 60% by mole of a repeating unit derived from at least one kind of a norbornene type monomer selected from a group consisting of a monomer represented by the general formula (I), a monomer represented by the general formula (II), a monomer represented by the general formula (III), a monomer represented by the general formula (IV) and a monomer represented by the general formula (V), and 60 to 40% by mole of a repeating unit derived from an acyclic olefin type monomer, a stretched film

EP 1 821 122 A1

obtained by forming the norbornene type copolymer composition in a film form and then stretching the film two times as large while heating the film to a glass transition temperature determined by a dynamic viscoelasticity, having an in-plane birefringence value Δn defined by the following formula in a range of 0.0033 or higher:

$$\Delta n = |nx - ny|$$

[Fig. 1]

norbornene alone
(single monomer)

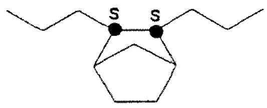

two continuous
norbornene monomers
(dimer)

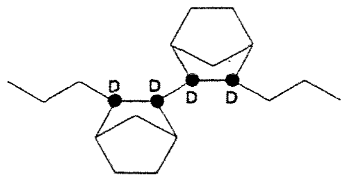

three continuous
norbornene monomers
(trimer)

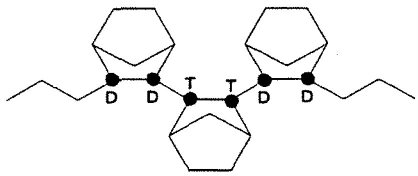

**Description**

TECHNICAL FIELD

The present invention relates to a retardation film comprising a norbornene type copolymer, being excellent in heat resistance, low specific gravity, low birefringence, low photoelasticity, and low chromatic dispersion and having high performance of retardation compensation.

BACKGROUND ART

In recent years, for display devices of computers and the like and flat panel televisions, liquid crystal displays (LCD) have been widely employed in place of Braun tube type cathode ray tubes (CRT). Such liquid crystal displays are generally configured by sticking a retardation film to a glass cell, in which electrodes enclosing liquid crystal molecules are assembled, by means of a transparent pressure sensitive adhesive, and further sticking a polarization film thereon with a pressure sensitive adhesive.

The retardation film to be used in such liquid crystal displays is generally produced by forming a film of a thermoplastic resin such as polycarbonate type resins, cellulose type resins, vinyl chloride type resins, acrylonitrile type resins, styrene type resins, polyolefin type resins, polysulfone type resins, and thermoplastic saturated norbornene type resins by a flow casting (solution casting) film formation method, a calender film formation method, or a melt extrusion film formation method and stretching the formed film longitudinally or transversely and or in both directions. Especially, since a film comprising a thermoplastic saturated norbornene type resin obtained by a ring-opening polymerization method or an addition polymerization method has excellent properties such as heat resistance, low specific gravity, low birefringence, low photoelasticity, and low chromatic dispersion, the film is highly expected as a retardation film. For example, Patent Document 1 discloses retardation films comprising hydrogenated substances of ring-opening (co) polymers of norbornene type monomers and comprising addition copolymers of norbornene type monomers and $\alpha$-olefin type monomers.

The norbornene type copolymers have excellent properties such as high transparency (for optical uses), low photoelasticity (scarcely causing birefringence by external stress), good dielectric property (for dielectrics of capacitors), low water absorption, high softening temperature (particularly in the case of a high norbornene content) (for high temperature uses), and high barrier against vapor (for wrapping film field).

In general, the norbornene type copolymers are often synthesized in the presence of a metallocene catalyst and production methods thereof are disclosed in Patent Documents 2, 3 and the like.

With respect to a formed article obtained by using a norbornene type copolymer, for example, a film, Patent Documents 4 and 5 disclose cast films of ethylene-norbornene copolymers; Patent Document 6 discloses films comprising norbornene type copolymers including norbornene copolymers; Patent Document 7 discloses sheets of semi-crystal norbornene type copolymers; Patent Document 8 discloses films of norbornene type copolymers; and Patent Document 9 discloses films comprising basically norbornene type copolymers and having high rigidity.

However, films comprising norbornene type copolymers obtained by copolymerization of norbornene type monomers and $\alpha$-olefin type monomers hardly develop sufficient retardation even if a stretching treatment is carried out in commonly employed rational stretching conditions or in a range of rational film thickness and there occurs a problem that the range of the retardation compensation of the obtained retardation films is considerably limited. In a field of large size liquid crystal televisions for which demand is expected to increase more and more in future, high performance of retardation compensation is required and accordingly, a retardation film with a high performance of retardation compensation comprising a norbornene type copolymer is desired.

Patent Document 1: Japanese Patent No. 3273046
Patent Document 2: European Patent Application No. 0503422
Patent Document 3: European Patent Application No. 0946618
Patent Document 4: German Patent Application No. 224538
Patent Document 5: German Patent Application No. 241971
Patent Document 6: European Patent Application No. 0384694
Patent Document 7: European Patent Application No. 0610814
Patent Document 8: European Patent Application No. 0610815
Patent Document 9: European Patent Application No. 0610816

DISCLOSURE OF THE INVENTION

PROBLEMS WHICH THE INVENTION IS TO SOLVE

In view of the above state of the art, it is the object of the present invention to provide a retardation film comprising a norbornene type addition copolymer, being excellent in heat resistance, low specific gravity, low birefringence, low photoelasticity, and low chromatic dispersion and having high performance of retardation compensation. Hereinafter, in this description, "norbornene type addition copolymer" is called as "norbornene type copolymer" for short. "Norbornene type monomer" means a monomer having a norbornene ring, which may be optionally substituted, in a molecule and "norbornene type copolymer" means a copolymer comprising a norbornene type monomer as a copolymerization component.

MEANS FOR SOLVING THE PROBLEM

The present invention is a retardation film, which comprises a norbornene type copolymer composition containing a norbornene type copolymer containing 40 to 60% by mole of a repeating unit derived from at least one kind of a norbornene type monomer selected from a group consisting of a monomer represented by the general formula (I), a monomer represented by the general formula (II), a monomer represented by the general formula (III), a monomer represented by the general formula (IV) and a monomer represented by the general formula (V), and 60 to 40% by mole of a repeating unit derived from an acyclic olefin type monomer, a stretched film obtained by forming the norbornene type copolymer composition in a film form and then stretching the film two times as large while heating the film to a glass transition temperature determined by a dynamic viscoelasticity, having an in-plane birefringence value Δn defined by the following formula in a range of 0.0033 or higher:

$$\Delta n = |nx - ny|$$

in the formula, nx and ny represent a refractive index in a direction of an x-axis and a y-axis, respectively, in the case of setting the x-axis in an axial direction of the refractive index becoming a maximum in a plane of the stretched film and setting the y-axis in a direction at right angles to the x-axis;
[Chem. 1]

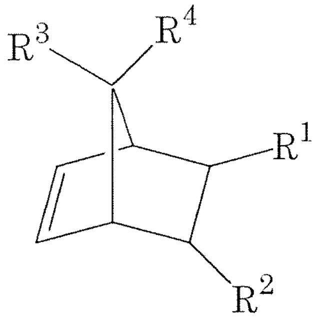

(I)

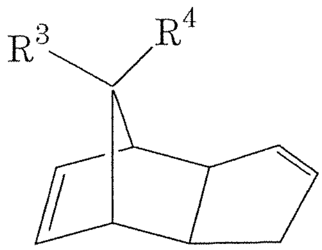

(II)

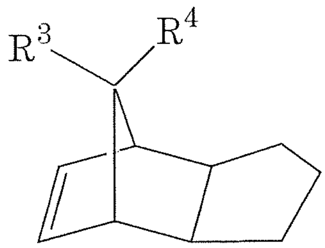

(III)

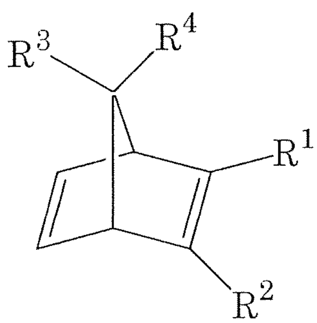

(IV)

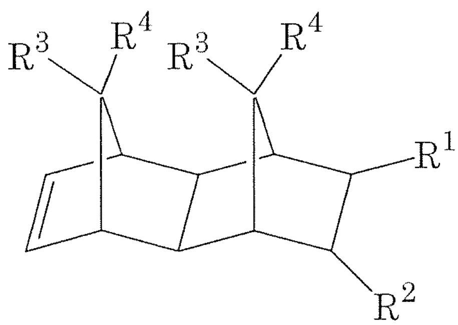

(V)

in the formula, $R^1$, $R^2$, $R^3$ and $R^4$ independently represent hydrogen, a linear or branched alkyl group having 1 to 8

carbon atoms, an aryl group having 6 to 18 carbon atoms, an alkylenearyl group having 7 to 20 carbon atoms, or a cyclic or acyclic alkenyl group having 2 to 20 carbon atoms; $R^1$, $R^2$, and $R^4$ may be bonded by a covalent bond of a carbon atom by a saturated, unsaturated or aromatic ring; further, $R^1$, $R^2$, $R^3$ and $R^4$ may be substituted by a polar group such as a halogen atom, a hydroxyl group, an ester group, an alkoxy group, a carboxy group, a cyano group, an amide group, an imido group, or a silyl group.

Hereinafter, the present invention will be described in detail.

In order to develop high retardation, it is important for a retardation film that the film is excellent in the alignment characteristic of the molecule. That is, in order to develop high retardation, at the time of aligning molecular chains while deforming the film by stretching, it becomes important for the film to have a structure in which molecular chains are straightly stretched easily following the deformation. In order to achieve this, it is preferable for the stable structure of the unit composing the molecular chains to be linear. Contrarily, if the structure of the unit is twisted, for example, spirally, at the time of composing the molecular chains, the molecular chains are hardly aligned even if being stretched and accordingly, it results in a low retardation value.

The present inventors made various investigations and found that the rigidity of the unit composing the molecular chains could be controlled by controlling the continuity of a repeating unit derived from a norbornene type monomer and a repeating unit derived from an acyclic olefin type monomer in a norbornene type copolymer.

Viewing the molecular structure of a norbornene type copolymer in terms of the continuity of a repeating unit derived from a norbornene type monomer, there are mainly the following cases: a repeating unit derived from a norbornene type monomer is a single monomer (the case one repeating unit derived from an acyclic olefin type monomer is bonded to both end sides of another repeating unit derived from a norbornene type monomer); a repeating unit derived from a norbornene type monomer is a dimer (the case one repeating unit derived from an acyclic olefin type monomer is bonded to both end sides of continuously bonded two repeating units derived from a norbornene type monomer); and a repeating unit derived from a norbornene type monomer is a trimer (the case one repeating unit derived from an acyclic olefin type monomer is bonded to both end sides of continuously bonded three repeating units derived from a norbornene type monomer).

In the case the repeating unit derived from a norbornene type monomer is a tetramer or more (the case one repeating unit derived from an acyclic olefin type monomer is bonded to both end sides of continuously bonded four or more repeating units derived from a norbornene type monomer), it is supposed to be possible that the spectrum peaks measured by $^{13}$C-NMR to specify the molecular structure of the norbornene type copolymer of the present invention are overlapped on those of the trimer, however in the present invention, because the ratio of the existing trimer is low, the ratio of the tetramer or more is supposed to be negligibly low.

Fig. 1 is a schematic drawing for explaining the continuity of the repeating units derived from a norbornene type monomer (norbornene) in a norbornene type copolymer.

The present inventors made various investigations and found that developability of retardation is improved more as the film obtained by using a norbornene type copolymer having a higher ratio of a dimer, and on the other hand that developability of retardation is low as the film obtained by using a norbornene type copolymer having a higher ratio of a single monomer or a trimer. This fact can be confirmed by recognizing the form of the molecules by computer simulation or calculating the anisotropy of polarizability in the axial direction of the molecules and in the direction perpendicular to the axial direction. In the computer simulation, it is made clear that particularly in the case of forming a dimer among those three kinds of sequences, the linearity and polarizability of the molecules are high and on the contrary, in the case of forming a single monomer or a trimer, the molecules are twisted to lower the polarizability.

The present inventors made further various investigations and found that in comparison of "meso modification" in which the bridge head positions of the neighboring norbornene type monomers in the repeating unit derived from a norbornene type monomer existing in form of a dimer are in the opposed direction with "racemic modification" in which the bridge head positions are in the same direction, although they are the same dimer, a film obtained by using a norbornene type copolymer with a higher meso modification ratio has higher developability of the retardation and a film obtained by using a norbornene type copolymer with a higher racemic modification ratio has lower developability of the retardation. This fact could also be confirmed by a computer simulation.

Fig. 2 is a schematic drawing for explaining the structure of the meso modification and racemic modification in the repeating unit derived from a norbornene type monomer existing in form of a dimer.

From the results of the above-mentioned investigations, the present inventors found that a retardation film comprising a norbornene type copolymer composition containing a norbornene type copolymer having a ratio (Rd) of the repeating unit derived from a norbornene type monomer existing in form of a dimer in a range of 20% by mole or higher and a ratio (Rt) of the repeating unit derived from a norbornene type monomer existing in form of a trimer in a range of 24% by mole or lower, is provided with characteristics such as heat resistance, low specific gravity, low photoelasticity, and low chromatic dispersion which are intrinsically possessed by a norbornene type resin and the film can develop sufficiently high retardation in commonly employed rational stretching conditions or in a range of rational film thickness, and have completed the present invention.

The retardation film of the present invention comprises a norbornene type copolymer composition containing a norbornene type copolymer containing a repeating unit derived from a norbornene type monomer and a repeating unit derived from an acyclic olefin type monomer.

The above-mentioned norbornene type copolymer has a repeating unit derived from a norbornene type monomer and a repeating unit derived from an acyclic olefin type monomer.
The above-mentioned norbornene type monomer is at least one kind of monomer selected from a group consisting of a monomer represented by the above-mentioned general formula (I); a monomer represented by the general formula (II); a monomer represented by the general formula (III); a monomer represented by the general formula (IV); and a monomer represented by the general formula (V).
Especially, a monomer represented by the above-mentioned general formula (I), a monomer represented by the general formula (IV), and a monomer represented by the general formula (V) are preferable. Practically, norbornene, alkyl-substituted norbornene, vinyl norbornene, norbornadiene, or tetracyclododecene is preferable and norbornene is more preferable. In another embodiment of the present invention, it is also allowed that at least one of $R^1$ to $R^4$ and/or $R^9$ to $R^{12}$ of the acyclic olefin type monomer represented by the general formula (VI), which will be described below, is an unsaturated group. In the case the monomers have such an unsaturated group, for example, the size of the retardation film can be fixed or chemical reforming may be carried out by further forming branched chains or carrying out crosslinking treatment. Formation of long branched chains (by introducing side chains to the secondary double bonds of diene monomers) can be carried out by properly selecting polymerization conditions (e.g., sufficiently long reaction duration to achieve high conversion).

In the above-mentioned norbornene type copolymer, the content of the above-mentioned repeating unit derived from a norbornene type monomer is 40% by mole in the lower limit and 60% by mole in the upper limit. If it is lower than 40% by mole, the glass transition temperature of the obtained copolymer is lowered and the heat resistance of the retardation film is lowered to make the film inferior in practicality, and if it exceeds 60% by mole, the melt viscosity or the solution viscosity of the obtained copolymer is increased for assuring the needed strength to increase the temperature for processing and thus deteriorate the processability, and further the obtained retardation film may possibly be colorized or the productivity is lowered. The content is more preferably 45% by mole in the lower limit and 55% by mole in the upper limit.

The above-mentioned acyclic olefin type monomer is not particularly limited as long as it is copolymerizable with the above-mentioned norbornene type monomer, however a monomer represented by the following formula (VI) is preferable. Especially, α-olefins are preferable and ethylene is more preferable. The acyclic olefin type monomer represented by the following formula (VI) may be used alone or if necessary two or more kinds of them may be used in combination.

[Chem.2]

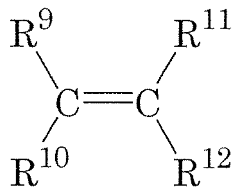

(V I)

in the formula, $R^9$, $R^{10}$, $R^{11}$, and $R^{12}$ represent hydrogen, a linear or branched alkyl group having 1 to 8 carbon atoms, or an aryl group having 6 to 18 carbon atoms.
Monomers in which $R^9$, $R^{10}$, $R^{11}$, , and R $^{12}$ represent hydrogen or an alkyl group having 1 to 6 carbon atoms such as ethyl group, propyl group, and the like are particularly preferable.

In the above-mentioned norbornene type copolymer, the content of the repeating unit derived from the above-mentioned acyclic olefin type monomer is 40% by mole in the lower limit and 60% by mole in the upper limit. If it is lower than 40% by mole, the temperature needed for processing is increased to deteriorate the processability and further the obtained retardation film may be possibly colorized, and if it exceeds 60% by mole, heat resistance of the obtained retardation film is lowered to deteriorate practicality. The content is more preferably 45% by mole in the lower limit and 55% by mole in the upper limit.

The above-mentioned norbornene type copolymer may contain a repeating unit derived from another monomer copolymerizable with the above-mentioned norbornene type monomer and acyclic olefin type monomer. Such an another monomer is not particularly limited, and for example, it may be dienes and cyclic olefins. Especially, monomers defined

by the following formula (VII) are preferable.

[Chem. 3]

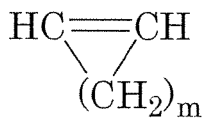 (VII)

in the formula, m represents an integer of 2 to 10.

In the above-mentioned norbornene type copolymer, the content of the repeating unit derived from the above-mentioned another monomer is 10% by mole in the upper limit. If it exceeds 10% by mole, the norbornene type copolymer may possibly fail to obtain prescribed properties such as heat resistance, which is expected for the norbornene type copolymer. The content is more preferably 5% by mole in the upper limit and further preferably 3% by mole in the upper limit.

The above-mentioned norbornene type copolymer preferably has a ratio (Rd) of the repeating unit derived from a norbornene type monomer existing in form of a dimer in a range of 20% by mole or higher and a ratio (Rt) of the repeating unit derived from a norbornene type monomer existing in form of a trimer in a range of 24% by mole or lower. If the ratios are out of these ranges, the alignment of the molecules becomes inferior and the retardation developability is lowered to considerably restrict the range of the application as the retardation film in some cases. A ratio (Rd) of the repeating unit derived from a norbornene type monomer existing in form of a dimer is more preferably in a range of 25% by mole or higher and a ratio (Rt) of the repeating unit derived from a norbornene type monomer existing in form of a trimer is more preferably in a range of 20% by mole or lower. Additionally, although it is more preferable that the upper limit of the ratio (Rd) of the repeating unit derived from a norbornene type monomer existing in form of a dimer is as high as possible, only a norbornene type copolymer having a ratio about 40% by mole has been made available so far.

The above-mentioned norbornene type copolymer preferably has a ratio (Rr) of a racemic modification in the repeating unit derived from a norbornene type monomer existing in form of a dimer in a range of 8% by mole or lower. If the dimer of the norbornene monomer has a mesobond, the molecular symmetry is good and consequently, it is supposed that the copolymer tends to have a linear form and the molecular chains tend to be aligned. On the other hand, if the dimer has a racemic bond, due to the steric hindrance of carbons at the bridge head positions in the norbornene, the norbornene monomers tend to be twisted and the molecular chains tend to be folded and bent. If Rr exceeds 8% by mole, the retardation developability may be sometimes lowered. It is more preferably 5% by mole or lower.

With respect to the above-mentioned norbornene type copolymer, the ratio (Rd) of the repeating unit derived from a norbornene type monomer existing in form of a dimer, the ratio (Rt) of the repeating unit derived from a norbornene type monomer existing in form of a trimer, the ratio (Rm) of the meso modification in the repeating unit derived from a norbornene type monomer existing in form of a dimer, the ratio (Rr) of the racemic modification in the repeating unit derived from a norbornene type monomer existing in form of a dimer and the like are calculated from the integrated value of the spectra measured by the $^{13}C$-NMR measurement.

The primary structures of the polymers identified by respective spectrum are described in, for example, "Macromolecules, 2000, Vol. 33, Page 8931", and "Macromol. Chem. Phys., 2001, Vol. 202, Page 3490".

A method for calculating the above-mentioned respective parameter will be described practically, taking a norbornene type copolymer wherein it contains norbornene as the norbornene type monomer and ethylene as the acyclic olefin type monomer, as an example.

The integrated value of a spectrum observed in a range of chemical shift value from 44 to 45.8 ppm in a spectrum chart obtained by the $^{13}C$-NMR measurement is defined as Is : the integrated value of the spectrum observed in a range from 45.8 to 48 ppm is defined as Id; the integrated value of the spectrum observed in ranges from 49 to 50 and from 52 to 53 ppm is defined as It; the integrated value of the spectrum observed in a range from 45.8 to 47.5 ppm is defined as Im; the integrated value of the spectrum observed in a range from 47.5 to 48 ppm is defined as Ir; the integrated value of the spectrum observed in a range from 25 to 34 ppm is defined as Ie; and the total integrated value of the spectrum observed in ranges from 34 to 42, from 44 to 48, , from 49 to 50 and from 52 to 53 ppm is defined as In.

Fig. 3 is a $^{13}C$-NMR spectrum relevant to It, Id, and Is of the norbornene type copolymer wherein it contains norbornene as the norbornene type monomer and ethylene as the acyclic olefin type monomer and Fig. 4 is a magnified view of the boundary portion of Id and Is.

According to these references, It shows the integrated value of the norbornene monomer in the center of the unit of the norbornene type copolymer comprising three bonded norbornene monomers in the spectrum: Id shows the integrated value of the unit comprising two bonded norbornene monomers and two norbornene monomers in both ends of the unit comprising three bonded norbornene monomers in the spectrum: and Is shows the integrated value of the unit comprising

one norbornene monomer in the spectrum. Fig. 3 shows them. Herein, S has a peak in a region of Is, D has a peak in a region of Id, and T has a peak in a region of It. These assignments are attributed to CH forming the polymer main chain among the carbon atoms of the norbornene monomers.
Accordingly, the ratio (Rd) of the repeating unit derived from the norbornene monomer existing in form of a dimer can be calculated in accordance with the following formula.

$$Rd = (Id - 2 \times It)/(It + Id + Is)$$

Further, the ratio (Rt) of the repeating unit derived from the norbornene monomer existing in form of a trimer can be calculated in accordance with the following formula.

$$Rt = 3 \times It/(Is + Id + It)$$

In the same references, the assignments of $^{13}C$ -NMR spectra in the case the repeating unit derived from the norbornene type monomer existing in form of a dimer is a meso modification or a racemic modification are also disclosed and the ratio (Rr) of the racemic modification and the ratio (Rm) of the meso modification can be calculated from these integrated values of the spectra.
Fig. 5 is a $^{13}C$-NMR spectrum relevant to Im and Ir of the norbornene type copolymer wherein it contains norbornene as the norbornene type monomer and ethylene as the acyclic olefin type monomer.
The ratio (Rr) of the racemic modification in the repeating unit derived from the norbornene type monomer existing in form of a dimer can be calculated in accordance with the following formula.

$$Rr = Ir/(Ir + Im)$$

Further, the ratio (Rm) of the meso modification in the repeating unit derived from the norbornene type monomer existing in form of a dimer can be calculated in accordance with the following formula.

$$Rm = Im/(Ir + Im)$$

In this case, Ir + Im = Id.
In the same references, it is described that the content (Rn) of the repeating unit derived from norbornene in the norbornene type copolymer and the content (Re) of the repeating unit derived from ethylene are calculated from the integrated values in the spectrum measured by $^{13}C$-NMR measurement.
This calculation is a relative calculation of the number of monomers from the number of carbon atoms in the spectrum.
Fig. 6 is the $^{13}C$-NMR spectrum relevant to Ie and In of the norbornene type copolymer wherein it contains norbornene as the norbornene type monomer and ethylene as the acyclic olefin type monomer.
The content (Rn) of the repeating unit derived from norbornene can be calculated in accordance with the following formulas.

$$Nn = In/4$$

$$Ne = (Ie - 3 \times Nn)/2$$

$$Rn = Nn/(Ne + Nn)$$

It is difficult to completely separate all of the peaks when the $^{13}C$-NMR spectrum is actually measured and peaks are overlapped. Further, depending on the $^{13}C$-NMR measurement apparatus and measurement conditions, the possibility of slight errors of the integrated values and ratios of the integrated values cannot be eliminated completely. Therefore, an example of preferable adjustment conditions and measurement conditions in the present invention is

shown as follows.
Solvent: 1,1,2,2-tetrachloroethane-$d_2$
Concentration: 10% by weight
Measurement apparatus: JNM-AL300, manufactured by JEOL Ltd. (resonance frequency of hydrogen atom: 300 MHz)
Sample tube diameter: 5 mm
Measurement temperature: 100°C
Measurement method: power gate manner
Pulse width: 4.1 μsec
Delay time: 1.394 sec
Data download time: 1.606 sec
Measurement frequency width: 20408 Hz
Decoupling: complete decoupling
Integration times: 10000 times
Chemical shift reference: middle peak of triplet of tetrachloroethane is set at 72.05 ppm.

The number average molecular weight of the above-mentioned norbornene type copolymer is preferably 10000 in the lower limit and 100000 in the upper limit. If it is lower than 10000, the retardation film to be obtained sometimes becomes fragile and easy to be ruptured and if it exceeds 100000, the resin pressure is increased at the time of melt extrusion and it makes molding difficult or the proper resin concentration is lowered at the time of solution casting and it worsens the productivity in some cases. It is more preferably 20000 in the lower limit and 80000 in the upper limit. Further, if the molecular weight is low, the retardation value of the retardation film tends to be low.

The molecular weight distribution (weight average molecular weight/number average molecular weight) of the above-mentioned norbornene type copolymer is preferably 1.5 in the lower limit and 5 in the upper limit.

The above-mentioned molecular weight can be measured at 145°C using o-dichlorobenzene as a solvent by gel permeation chromatography (GPC). The molecular weight is obtained as the polystyrene reduced molecular weight.

The molecular weight of the above-mentioned norbornene type copolymer can also be measured using Melt Volume Rate (MVR) as an index. MVR can be measured according to ISO 1133 and means the volume (mL/10 min) of the resin discharged in 10 minutes at a temperature of 260°C and a load of 2.16 kg. MVR of the above-mentioned norbornene type copolymer is preferably 0.1 mL/10 min in the lower limit and 500 mL/10 min in the upper limit. If it is lower than 0.1 mL/10 min, the norbornene type copolymer may be sometimes inferior in the formability and if it exceeds 500 mL/10 min, a molded article with sufficient strength cannot be obtained in some cases. It is more preferably 0.5 mL/10 min in the lower limit and 200 mL/10 min in the upper limit.

The above-mentioned norbornene type copolymer can be produced by optimizing a polymerization catalyst and polymerization conditions.

A catalyst to be used for producing the above-mentioned norbornene type copolymer may be composite catalyst systems comprising a metallocene catalyst and methyl alumoxane as a promoter.

Preferable examples of the metallocene catalyst are racemic ethylidene-bis(indenyl)zirconium dichloride, racemic dimethylsilyl-bis(2-methyl-benzoindenyl)zirconium dichloride, racemic isopropylidene-bis(tetrahydroindenyl)zirconium dichloride, and isopropyliden(1-indenyl)(3-isopropyl-cyclopentadienyl)zirconium dichloride.

Among them, racemic isopropylidene-bis(tetrahydroindenyl)zirconium dichloride and isopropylidene(1-indenyl)(3-isopropyl-cyclopentadienyl)zirconium dichloride are preferable.

Other catalyst systems are also usable for producing the norbornene type copolymer of the present invention as long as they are capable of providing the above-mentioned characteristic microstructure.

As the method of producing the above-mentioned norbornene copolymer, for example, conventionally known methods described in Patent Document 2 can be employed. Practically, the norbornene type copolymer can be produced by introducing a norbornene type monomer and an acyclic olefin type monomer into a reactor, adding a solution or dispersion of a catalyst system thereto, and setting the mixture at a prescribed reaction temperature. The ratio and the like of the repeating units derived from the monomers in the norbornene type copolymer to be obtained can be controlled by optimally setting the reaction temperature and pressure. Since the acyclic olefin type monomer is often in a gaseous state, it is preferable to keep the pressure of the olefin constant in order to keep the introduction ratio of the olefin monomer in the copolymer constant. After completion of the polymerization reaction, the catalyst is inactivated by a method, for example, adding an alcohol and then removed from the reaction system.

To improve the characteristics, the above-mentioned norbornene type copolymer composition may contain other compatible or non-compatible polymers to an extent that the purposes of the present invention are not hindered. These polymers may form another layer or may be mixed with the norbornene type copolymer. Mixing may be carried out in a melt state or in a solution state.

Such resins are not particularly limited, and they may be polyethylene, polypropylene, polymethylbuta-1-ene, poly(4-methylpenta-1-ene), polybuta-1-ene, polystyrene, poly(vinyl chloride), poly(vinylidene chloride), polyvinyl fluoride, polytetrafluoroethylene, polychloroprene, poly(acrylic acid ester), poly(methacrylic acid ester), polyacrylamide, polyacrylonitrile, acrylonitrile-butadienestyrene copolymer, acrylonitrile-styrene copolymer, acrylonitrile-styrene-acrylic acid ester copolymer, polyvinyl alcohol, poly(vinyl acetate), poly(vinyl stearate), poly(vinyl benzoate), poly(vinyl maleate), polyvinyl butyral, poly(allyl phthalate), polyallyl melamine, ethylene-vinyl acetate copolymer, polyethylene oxide-bisglycidyl ether copolymer, polyoxymethylene, polyoxyethylene, polyoxymethylene-ethylene oxide copolymer, polyphenyl oxide polymer, polycarbonate, polysulfone, polyurethane, nylon 6, nylon 6,6, nylon 11, nylon 12, poly(ethylene terephthalate), poly (butylene terephthalate), poly-1,4-dimethylol cyclohexane terephthalate, poly(ethylene naphthalate) (PEN), poly(ethylene naphthalate bibenzoate) (PENBB), phenol-formaldehyde resin, melamine-formaldehyde resin, cellulose, propionic acid cellulose, cellulose ether, and protein.

The above-mentioned norbornene type copolymer composition preferably contains a lubricant in order to improve smoothness and formability. Addition of the lubricant lowers the friction among pellets or between pellets and a barrel and suppresses generation of gel particles even if shearing power is applied by a screw in the case of film formation by the extrusion molding method.

In general, the lubricant is supplied (externally added) together with resin pellets or contained (internally added) in the resin pellets at the time of feeding the lubricant to a molding apparatus. In the present invention, it is preferable that the lubricant is internally added. Internal addition causes various effects: that is, defects due to deterioration of the lubricant because of accumulation of the lubricant at the root of the extruder can be suppressed; decrease of cleanness in the production environments due to powder scattering in the case of external addition can be suppressed; and foreign matters in the lubricant can be efficiently removed since it is possible to filter the lubricant at the time of pelletization.

The above-mentioned norbornene type copolymer is generally obtained in form of a thick polymerization solution, so that the pellets to which the lubricant is internally added can be obtained by adding the lubricant to the polymerization solution in addition to an additive such as an antioxidant, a stabilizer as necessary and then subjecting the solution to desolvation and successively carrying out pelletization of the obtained solution by using, for example, a pelletizer.

The above-mentioned lubricant is not particularly limited, however at least one kind selected from a group consisting of a fatty acid ester compound having a long chain aliphatic hydrocarbon group, an amide compound having a long chain aliphatic hydrocarbon group, and a salt having a long chain aliphatic hydrocarbon group is preferable.

Herein, the long chain aliphatic hydrocarbon group means an aliphatic hydrocarbon group having 10 or more carbon atoms, preferably 12 to 30 carbon atoms.

The lubricant comprising an aliphatic ester compound having the above-mentioned long chain aliphatic hydrocarbon group is not particularly limited, and for example, compounds obtained by esterifying aliphatic carboxylic acids such as stearic acid, montanic acid, behenic acid, oleic acid, and palmitic acid with polyhydric alcohols such as ethylene glycol, diethylene glycol, propylene glycol, glycerin, pentaerythritol, and dipentaerythritol and monohydric alcohols having long chain aliphatic hydrocarbon groups such as stearyl alcohol and oleyl alcohol by means of dehydration reaction and the like.

In the case of using a polyhydric alcohol, it is not necessarily required to esterify all of the hydroxyl groups of the polyhydric alcohol, but so-called partially esterified compounds in which some of the hydroxyl groups remain may be used. Especially, glycerin distearate, monostearyl behenate, pentaerythritol tetrastearate, pentaerythritol tristearate, and pentaerythritol distearate are preferable and pentaerythritol tetrastearate is more preferable.

The lubricant comprising an amide compound having the above-mentioned long chain aliphatic hydrocarbon group is not particularly limited, and for example, compounds obtained by amide-bonding the above-exemplified aliphatic carboxylic acids and polyamine compounds such as ethylenediamine, propylenediamine, tetraethylenediamine, and phenylenediamine and mono-amine compounds having the long chain aliphatic hydrocarbon groups such as stearylamine and montanylamine. Especially, ethylenebisstearylamide, stearylstearylamide are preferable and ethylenebisstearylamide is more preferable.

The lubricant comprising a salt having the above-mentioned long chain aliphatic hydrocarbon group is not particularly limited, and for example, salts of the above-exemplified aliphatic carboxylic acids. A metal to be bonded to the salts is not particularly limited, but for example, zinc, magnesium, calcium, alkaline earth metals and the like are preferable. Among them, zinc is more preferable.

As the above-mentioned lubricant, a wax such as silicone, polypropylene wax, and polyethylene wax may be used in combination in addition to one kind selected from a group consisting of a fatty acid ester compound having a long chain aliphatic hydrocarbon group, an amide compound having a long chain aliphatic hydrocarbon group, and a salt having a long chain aliphatic hydrocarbon group.

The content of the lubricant in the above-mentioned norbornene type copolymer composition is preferably 0.01 parts by weight in the lower limit and preferably 3 parts by weight in the upper limit to 100 parts by weight of the above-mentioned norbornene type copolymer. It is more preferably 0.03 parts by weight in the lower limit and more preferably 2.5 parts by weight in the upper limit and further preferably 0.05 parts by weight in the lower limit and further preferably 2 parts by weight in the upper limit.

The above-mentioned norbornene type copolymer composition may contain conventionally known additives

such as phenol type and phosphorus type aging prevention agents; phenol type heat deterioration prevention agents; amine type antistatic agents; and benzophenone type and benzotriazole type ultraviolet absorbents to an extent that purposes of the present invention are not hindered.

A stretched film obtained by forming the norbornene type copolymer composition in a film form and then stretching the film two times as large while heating the film to a glass transition temperature determined by a dynamic viscoelasticity, has an in-plane birefringence value Δn defined by the following formula in a range of 0.0033 or higher:

$$\Delta n = |nx - ny|$$

in the formula, nx and ny represent a refractive index in a direction of an x-axis and a y-axis, respectively, in the case of setting the x-axis in an axial direction of the refractive index becoming a maximum in a plane of the stretched film and setting the y-axis in a direction at right angles to the x-axis.

If the in-plane birefringence value Δn is lower than 0.0033, the retardation value required for the retardation film in the rational stretching conditions or in a range of a rational film thickness cannot be developed and the retardation film can only be used for extremely limited purposes. Particularly, since the retardation film to be used for liquid crystal televisions whose development has been progressed remarkably in these years is required to have a high retardation value, it is indispensable that the in-plane birefringence value Δn is 0.0033 or higher. Further, to use the retardation film for middle to small appliances such as a mobile phone, the retardation film is highly required to be thin and if Δn is 0.0033 or higher, the retardation film can be made thinner even if the film has the same retardation value.

For example, the above-mentioned value Δn can be measured and calculated as follows.
In this description, a sample for measuring Δn is produced and evaluated as follows.
A film obtained by forming a norbornene type copolymer composition in a film-like form with a thickness of 150 μm is cut out in a width of 20 mm and stretched at a stretching speed of 50 mm/min by a tension tester in a range of chuck distance from 50 mm to 100 mm. As soon as the stretching is completed, the film is cooled to a room temperature to obtain a stretched sample. The tests are carried out at 5 points of the stretching temperatures: that is, the glass transition temperature (Tg) - 6°C; glass transition temperature (Tg) - 3°C; glass transition temperature (Tg) ± 0°C; glass transition temperature (Tg) + 3°C; and glass transition temperature (Tg) + 6°C.
The retardation value R (nm) in the center part of the stretched sample is measured by an automatic birefringence analyzer (e.g., KOBRA-21ADH, manufactured by OJI Scientific Instruments). The retardation value R (nm) is divided by the film thickness d (nm) and as Δn at the time of taking out the sample, which will be described later, Δn3 is calculated according to the following formula.

$$\Delta n3 = R/d$$

The calculation is carried out as follows.
Fig. 7 shows a graph of a stress-time curve obtained by the tension tester. In the measurement of Δn, on completion of the stretching of the film-like sample, it is preferable to cool the sample as soon as possible. It is because if the film is left in an oven as it is on completion of the stretching, stress is generally moderated and following that, the retardation value is lowered. However, it is difficult to take out all samples at the same timing on completion of the stretching. Therefore, the stress value is read out in the graph and the effect of the time lag is compensated.
In Fig. 7, 1) shows the starting point of stretching. Similarly, 2) is equivalent to the completion point of stretching and 3) is equivalent to the point of taking out the sample. Since the sample to be practically subjected to the retardation measurement is supposed to have the remaining stress of 3), Δn2, which is the Δn value of 2), is calculated from stress value σ2 (MPa) of 2), stress value σ3 (MPa) of 3), and Δn3, which is the Δn value of 3). Since the stretching test is carried out at five temperature points, five combinations of σ3 - Δn3 can be obtained. These combinations are plotted as shown in Fig. 8 while σ(MPa) is set in the axis of abscissas and Δn is set in the axis of ordinates to calculate the logarithmic approximation formula. The stress value of σ2 is substituted for the obtained approximation formula to calculate Δn2.
Further, ΔT (= stretching temperature - Tg), which is the difference of the glass transition temperature and the stretching temperature, is plotted in the axis of abscissas and Δn2 plotted in the axis of ordinates, to obtain the linear approximation formula of ΔT - Δn2 and calculate Δn2 at Tg and the calculated value is defined as the in-plane birefringence value Δn.

In this description, the glass transition temperature (Tg) of the above-mentioned norbornene type copolymer (composition) means the peak top temperature of the tensile loss elastic modulus E" obtained in the case the above-mentioned copolymer (composition) is formed in a film-like form and the film is subjected to 0.01% deformation at 10 Hz using a dynamic viscoelasticity measurement apparatus and heated at 5°C/min from 25°C to 250°C.
The glass transition temperature (Tg) of a resin is measured by various methods and generally, it is measured by a

differential scanning calorimetry (DSC). However, if the resin is formed in a film-like form and the film is stretched, it becomes important to directly detect the alteration following the relaxation but not the change of the specific heat such as DSC. Therefore, in this description, before the formation in a film-like form and the stretching of the film, the temperature showing the peak top of E" measured by a dynamic viscoelasticity measurement apparatus under the above-mentioned conditions is defined as the glass transition temperature (Tg).

The retardation film of the present invention can be produced by film-forming the above-mentioned norbornene type copolymer composition into a raw film and then subjecting the film to the stretching treatment.

The method for producing a raw film of the above-mentioned norbornene type copolymer composition is not particularly limited and conventionally known film formation methods such as a melt extrusion method, a calender method, and a solution casting (flow casting) method may be employed. Especially, the melt extrusion method is preferable since it is excellent in the productivity and environmentally friendly.

To provide the above-mentioned raw film with retardation and obtain the retardation film, it is generally required to carry out stretching in the state that the temperature is increased to about the glass transition temperature (Tg) determined in the dynamic viscoelasticity test.

The method for the above-mentioned stretching treatment is not particularly limited and may be determined in accordance with the value of the retardation to be provided. The stretching method may be, for example, longitudinal uniaxial stretching, transverse uniaxial stretching, simultaneous biaxial stretching, and successive biaxial stretching. The stretching method may be carried out in a continuous manner or a batch manner.

The temperature in the above-mentioned stretching treatment is preferably close to the glass transition temperature (Tg), although it depends on the condition of the stretching magnification. If the stretching is carried out at a temperature excessively lower than the glass transition temperature (Tg), generally a high retardation value can be provided, however the possibility of whitening or rupture of the film due to generation of crazes is increased. Further, although whitening does not occur, there occur problems that it becomes difficult to uniformly arrange the axial direction of the retardation at a high precision or it becomes difficult to obtain sufficient durability due to decrease of the retardation value in the case a durability test is carried out in a high temperature atmosphere. On the other hand, if the stretching is carried out at a temperature excessively higher than the glass transition temperature (Tg), it becomes difficult to obtain the needed retardation value.

The retardation film of the present invention is to be used while being stuck to a polarization film and the polarization film generally comprises a laminate obtained by laminating a protection film on both faces of a polarizer. Since the retardation film of the present invention can also have a function as the protection film, the film may be directly stuck to at least one face of the polarizer.

A polarization plate, which comprises a laminate of the retardation film of the present invention and a polarization film or a polarizer, also constitutes the present invention. A liquid crystal display, which comprises the retardation film of the present invention or the polarization plate of the present invention, also constitutes the present invention.

## EFFECT OF THE INVENTION

The retardation film of the present invention comprises a norbornene type copolymer composition containing a norbornene type copolymer containing a repeating unit derived from a norbornene type monomer and a repeating unit derived from an acyclic olefin type monomer, so that the film can be provided with characteristics such as heat resistance, low specific gravity, low photoelasticity, and low chromatic dispersion which are intrinsically possessed by a norbornene type resin.

Further, the film can develop high retardation due to use of the norbornene type copolymer with a specified structure, and use of the film with the polarization film provides viewing angle improvement effects of a liquid crystal display.

The present invention provides the retardation film comprising a norbornene type copolymer, being excellent in heat resistance, low specific gravity, low birefringence, low photoelasticity, and low chromatic dispersion and having high performance of retardation compensation.

## BEST MODES FOR CARRYING OUT THE INVENTION

Hereinafter, embodiments of the present invention will be described in more detail with reference to Examples, however it is not intended that the present invention be limited to the illustrated embodiments.

(Example 1)

(1) Synthesis of norbornene-ethylene copolymer

Norbornene, a hydrocarbon type solvent, ethylene, and hydrogen in concentrations of 2.95 mol/L for norbornene

and 1.05 mol/L for ethylene and at a ratio of hydrogen to ethylene of $0.21 \times 10^{-3}$ were supplied to a continuous polymerization apparatus. Simultaneously, a catalyst system comprising racemic isopropylidene-bis(tetrahydroindenyl)zirconium dichloride as a catalyst and methyl alumoxane (10% toluene solution) as a promoter was supplied to the reaction apparatus. The temperature of the reaction apparatus was kept at 90°C. In the next step, the solvent was removed by high temperature and reduced pressure. The copolymer in melted state was extruded in form of a strand and the strand was cut to obtain pellets with a length of 3 mm and a diameter of 2 mm. The obtained copolymer was mixed with 0.6% of an antioxidant (trade name: Irganox 1010, manufactured by Ciba Specialty Chemicals K.K.) and 0.4% of pentaerythritol tetrastearate.

(2) Production of raw film

The obtained pellets of the norbornene-ethylene copolymer were melted and kneaded in a condition of 270°C using a uniaxial extruder (GM-50, manufactured by GM Engineering Co., Ltd., barrel diameter: 50 mm; screw: full flight screw) and separated from foreign matters by filtering the melted mixture through a polymer filter by a gear pump and extruded using a mold with 1300 mm width to obtain a 60 μm-thick raw film. The pellets were supplied to a hopper in condition of purging with nitrogen (in a so-called natural feed manner). The extrusion amount was 20 kg/h.

(Examples 2 to 4 and Comparative Example 1)

Norbornene-ethylene copolymers were synthesized in the same manner as Example 1, except that the synthesis conditions were changed as shown in Table 1 and norbornene type copolymer compositions and raw films were obtained in the same manner as Example 1, except that the obtained norbornene type copolymers were used.
[Table1]

| | norbornene concentration (mol/L) | ethylene concentration (mol/L) | hydrogen/ ethylene ratio | catalyst | temperature (°C) | pellet diameter (mm) | additive |
|---|---|---|---|---|---|---|---|
| Example 1 | 2.95 | 1.05 | $0.210 \times 10^{-3}$ | racemic isopropylidene-bis (tetrahydroindenyl) zirconium dichloride | 90 | $3 \times 2$ | 0.6% Irganox 1010 0.4% pentaerythritol tetrastearate |
| Example2 | 2.14 | 0.36 | $0.150 \times 10^{-3}$ | isopropylidene-(1-indenyl) (3-isopropyl-cyclopentadienyl) zirconium dichloride | 100 | $3 \times 2$ | - |
| Example3 | 6.59 | 1.25 | $0.269 \times 10^{-3}$ | racemic isopropylidene-bis (tetrahydroindenyl) zirconium dichloride | 100 | $3 \times 2$ | - |
| Example4 | 3.44 | 0.63 | $10^{-3}$ $0.196 \times 10^{-3}$ | racemic isopropylidene-bis (tetrahydroindenyl) zirconium dichloride | 100 | $3 \times 2$ | 0.6% Irganox 1010 0.4% pentaerythritol tetrastearate |
| Comparative Example1 | 1.95 | 0.41 | $0.107 \times 10^{-3}$ | racemic isopropylidene-bis (tetrahydroindenyl) zirconium dichloride | 100 | $3 \times 2$ | 0.6% Irganox 1010 0.4% pentaerythritol tetrastearate |

(Comparative Example 2)

A raw film was obtained in the same manner as Example 1, except that "Topas 6013" manufactured by TICONA as a commercialized norbornene-ethylene copolymer was used.

(Comparative Example 3)

A raw film was obtained in the same manner as Example 1, except that "Topas 5013" manufactured by TICONA as a commercialized norbornene-ethylene copolymer was used.

(Evaluation)

The obtained norbornene-ethylene copolymers and the like were subjected to the following evaluations. The results are shown in Table 2.

(1) Measurement of $^{13}C$-NMR spectrum of norbornene-ethylene copolymer

A sample was produced by dissolving 100 mg of each norbornene-ethylene copolymer in 900 mg of 1,1,2,2-tetrachloroethane-$d_2$ at 100°C and $^{13}C$-NMR spectrum was measured under the following conditions.
Measurement apparatus: JNM-AL300, manufactured by JEOL Ltd.
(resonance frequency of hydrogen atom: 300 MHz)
Sample tube diameter: 5 mm
Measurement temperature: 100°C
Measurement method: power gate manner
Pulse width: 4.1 μsec
Delay time: 1.394 sec
Data download time: 1.606 sec
Measurement frequency width: 20408 Hz
Decoupling: complete decoupling
Integration times: 10000 times
Chemical shift reference: middle peak of triplet of tetrachloroethane is set at 72.05 ppm.
The ratio (Rd) of the repeating unit derived from norbornene existing in form of a dimer; the ratio (Rt) of the repeating unit derived from norbornene existing in form of a trimer; the ratio (Rm) of the meso modification in the repeating unit derived from norbornene existing in form of a dimer; and the ratio (Rn) of the repeating unit derived from norbornene were calculated from each obtained $^{13}C$-NMR spectrum.

(2) Measurement of Melt Volume Rate (MVR) of norbornene-ethylene copolymer

The volume of the resin discharged in 10 minutes at a temperature of 260°C and a load of 2.16 kg was measured according to ISO 1133. The unit is mL/10 min.

(3) Measurement of glass transition temperature (Tg) of norbornene-ethylene copolymer (composition)

A sample was produced by forming each norbornene-ethylene copolymer (composition) in a film-like form with a thickness of 150 μm by melt extrusion and cutting the film in a size of 5×100 mm, and the dependence of the dynamic viscoelasticity of each sample on the temperature was measured by applying 0.01% deformation at 10 Hz frequency and heating at the rate of 5°C/min from 25°C to 250°C using a stretching dynamic viscoelasticity measurement apparatus (RSA II, manufactured by Rheometric Scientific Inc.). The peak top temperature of the tensile loss elastic modulus E" measured accordingly was defined as the glass transition temperature (Tg).

(4) Measurement of in-plane birefringence value Δn

Each raw film was cut out in a width of 20 mm and stretched at a stretching speed of 50 mm/min in a range of chuck distance from 50 mm to 100 mm by TENSILON manufactured by ORIENTEC Co., Ltd. as a tension tester and as soon as the stretching was completed, the film was cooled to a room temperature to obtain each stretched sample. The tests are carried out at 5 points of the stretching temperatures: that is, the glass transition temperature (Tg) - 6°C; glass transition temperature (Tg) - 3°C; glass transition temperature (Tg) ± 0°C; glass transition temperature (Tg) + 3°C; and glass transition temperature (Tg) + 6°C.

The retardation value in the center part of the stretched sample was measured by an automatic birefringence analyzer (KOBRA-21ADH, manufactured by OJI Scientific Instruments, measurement wavelength: 550 nm). The retardation value R (nm) was divided by the film thickness d (nm) and as Δn at the time of taking out the sample, Δn3 was calculated.

$$\Delta n3 = R/d$$

The logarithmic approximation formula of aσ - Δn curve was calculated from the stress value σ3 and Δn3 at the time of each sample being taken out, by plotting σ in the axis of abscissas and Δn in the axis of ordinates, and the stress value σ2 on completion of the stretching was substituted for the stress value in the obtained approximation formula to calculate Δn2 on completion of the stretching and accordingly Δn2 at each temperature was calculated.
Successively, ΔT (= stretching temperature - Tg), which is the difference between the glass transition temperature and the stretching temperature is plotted in the axis of abscissas and Δn2 is plotted in the axis of ordinates, to obtain the linear approximation formula of ΔT - Δn2, and the Δn at Tg was calculated by substituting 0 for ΔT and the calculated value was defined as the in-plane birefringence value Δn.
[Table 2]

| | molecular structure | | | | physical properties | | |
|---|---|---|---|---|---|---|---|
| | (% by Rd mole) | (% by Rt mole) | (% by Rr mole) | (% by Rn mole) | MVR | Tg(°C) | Δn |
| Example 1 | 32.1 | 10.3 | 0.8 | 45.5 | 11.5 | 136.6 | 0.00405 |
| Example2 | 39.6 | 0.0 | 0.3 | 46.5 | 14.4 | 137.5 | 0.00462 |
| Example3 | 32.7 | 11.4 | 0.7 | 46.8 | 11.1 | 141.4 | 0.00364 |
| Example4 | 28.6 | 15.6 | 1.0 | 48.4 | 12.4 | 141.5 | 0.00352 |
| Comparative Example1 | 19.7 | 24.8 | 0.6 | 48.9 | 10.5 | 139.9 | 0.00316 |
| Comparative Example2 | 39.3 | 0.5 | 16.0 | 47.3 | 13.5 | 139.7 | 0.00302 |
| Comparative Example3 | 21.3 | 0.0 | 23.2 | 45.3 | 56.0 | 140.1 | 0.00188 |

(5) Production of retardation film

It was to tried to produce It was to tried to produce a retardation film having a thickness of 40 μm and retardation of 1/4 wavelength retardation value 140 nm) by stretching each film obtained in Examples and Comparative Examples at a stretching magnification of two times as large by a longitudinal uniaxial stretching apparatus.
The stretching was carried out as follows. Each film was continuously unrolled at a speed of 10 m/min and preliminarily heated by being passed through a preliminary heating zone at 130°C and thereafter, the film was stretched in the longitudinal direction two times as large at the temperature shown in Table 3 in a successive stretching zone and the alignment was fixed by passing the film in a cooling zone at 90°C, and after that, the film was again rolled in form of a roll to obtain a retardation film.
With respect to the film of Comparative Example 3, no retardation film having the retardation value of 140 nm could be obtained even if the stretching temperature was lowered, and the film was ruptured.
The thickness of the center portion of each obtained retardation film was about 40 μm. The retardation value $R_0$ in the center portion of each retardation film was measured by an automatic birefringence analyzer (KOBRA-21ADH, manufactured by OJI Scientific Instruments, measurement wavelength: 550 nm).
After the retardation value measurement, the obtained retardation film was left in an oven at 90°C for 500 hours and then again subjected to the in-plane retardation value $R_{500}$ measurement to evaluate the thermal stability. Table 3 shows $R_{500}/R_0$ as the heat durability.
[Table 3]

| | stretching temperature - Tg (°C) | retardation $R_0$ (nm) | $R_{500}/R_0$ |
|---|---|---|---|
| Example 1 | 3.5 | 141 | 0.99 |
| Example2 | 1.5 | 143 | 0.98 |
| Example3 | 0.5 | 139 | 0.98 |
| Example4 | 0 | 141 | 0.98 |
| Comparative Example 1 | -1.3 | 143 | 0.93 |
| Comparative Example2 | -1.8 | 143 | 0.91 |
| Comparative Example3 | -5.5<br>(-1.8) | ruptured<br>(98) | -<br>- |

From Table 1, it was found that if the norbornene-ethylene copolymer had a low Rd value, a high Rt value, and a high Rr value, the obtained Δn value became low. Even in the case such a resin was used for producing a retardation film, no sufficient retardation could be obtained. On the other hand, if Rd was adjusted to be 25% by mole or higher and Rt was adjusted to be 20% by mole or lower, a particularly high Δn could be obtained.
Further, from Table 3, if it is tried to obtain a retardation film with a thickness of 40 μm and a retardation value of 140 nm by stretching a film comprising a copolymer having Δn lower than 0.0033, the film was ruptured before the required retardation value was achieved even when carrying out the stretching at a low temperature as being shown in Comparative Example 3, and although the retardation value could be satisfactory by carrying out stretching at a low temperature as being shown in Comparative Examples 1 and 2, decrease of the retardation value was significant in the durability test. On the other hand, in Examples 1 to 4, even if the stretching was carried out at a sufficiently high temperature, the required retardation value could be obtained and the retardation value was scarcely decreased even in the durability test.

INDUSTRIAL APPLICABILITY OF THE INVENTION

The present invention provides a retardation film comprising a norbornene type copolymer, being excellent in heat resistance, low specific gravity, low birefringence, low photoelasticity, and low chromatic dispersion and having high performance of retardation compensation.

BRIEF DESCRIPTION OF DRAWINGS

[Fig. 1] A schematic drawing for explaining the continuity of repeating units derived from a norbornene type monomer (norbornene) in a norbornene type copolymer.
[Fig. 2] A schematic drawing for explaining structures of a meso modification and a racemic modification in a repeating unit existing in form of a dimer derived from a norbornene type monomer (norbornene).
[Fig. 3] A $^{13}$C-NMR spectrum relevant to It, Id, and Is of a norbornene type copolymer whrein it contains norbornene as a norbornene type monomer and ethylene as an acyclic olefin type monomer.
[Fig. 4] A magnified view of the boundary portion of Id and Is of $^{13}$C-NMR spectrum of a norbornene type copolymer whrein it contains norbornene as the norbornene type monomer and ethylene as the acyclic olefin type monomer.
[Fig. 5] A $^{13}$C-NMR spectrum relevant to Im and Ir of a norbornene type copolymer wherein it contains norbornene as the norbornene type monomer and ethylene as the acyclic olefin type monomer.
[Fig. 6] A $^{13}$C-NMR spectrum relevant to Ie and In of a norbornene type copolymer wherein it contains norbornene as the norbornene type monomer and ethylene as the acyclic olefin type monomer.
[Fig. 7] A graph of a stress-time curve obtained by a tension tester.
[Fig. 8] A graph showing a logarithmic approximation curve calculated from five pairs of σ3 and Δn3 measured at five temperature points.

**Claims**

1. A retardation film,

which comprises a norbornene type addition copolymer composition containing a norbornene type addition copolymer containing 40 to 60% by mole of a repeating unit derived from at least one kind of a norbornene type monomer selected from a group consisting of a monomer represented by the general formula (I), a monomer represented by the general formula (II), a monomer represented by the general formula (III), a monomer represented by the general formula (IV) and a monomer represented by the general formula (V), and 60 to 40% by mole of a repeating unit derived from an acyclic olefin type monomer,
a stretched film obtained by forming the norbornene type addition copolymer composition in a film form and then stretching the film two times as large while heating the film to a glass transition temperature determined by a dynamic viscoelasticity, having an in-plane birefringence value Δn defined by the following formula in a range of 0.0033 or higher:

$$\Delta n = |nx - ny|$$

in the formula, nx and ny represent a refractive index in a direction of an x-axis and a y-axis, respectively, in the case of setting the x-axis in an axial direction of the refractive index becoming a maximum in a plane of the stretched film and setting the y-axis in a direction at right angles to the x-axis;

[Chem. 1]

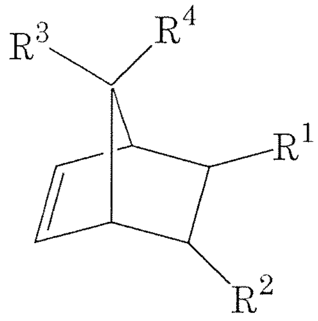

( I )

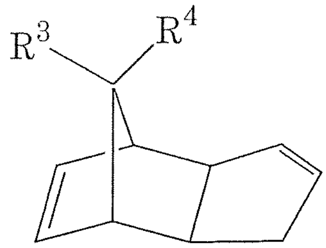

( I I )

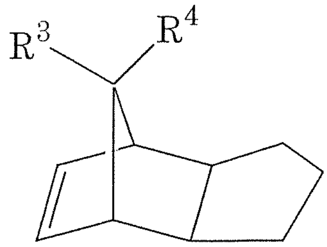

( I I I )

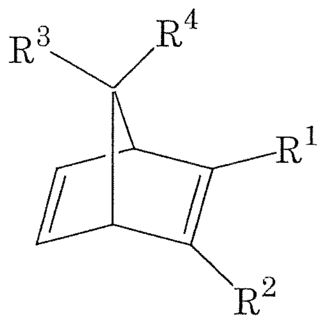

( I V )

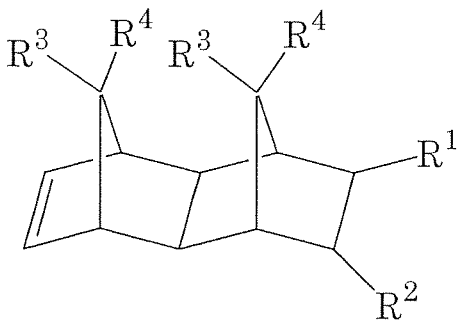

( V )

in the formula, $R^1$, $R^2$, $R^3$ and $R^4$ independently represent hydrogen, a linear or branched alkyl group having 1 to 8 carbon atoms, an aryl group having 6 to 18 carbon atoms, an alkylenearyl group having 7 to 20 carbon atoms, or

a cyclic or acyclic alkenyl group having 2 to 20 carbon atoms; $R^1$, $R^2$, $R^3$ and $R^4$ may be bonded by a covalent bond of a carbon atom by a saturated, unsaturated or aromatic ring; further, $R^1$, $R^2$, $R^3$ and $R^4$ may be substituted by a polar group such as a halogen atom, a hydroxyl group, an ester group, an alkoxy group, a carboxy group, a cyano group, an amide group, an imido group, or a silyl group.

**2.** The retardation film according to claim 1,
wherein the norbornene type addition copolymer has a ratio (Rd) of the repeating unit derived from a norbornene type monomer existing in form of a dimer in a range of 20% by mole or higher and a ratio (Rt) of the repeating unit derived from a norbornene type monomer existing in form of a trimer in a range of 24% by mole or lower.

**3.** The retardation film according to claim 1,
wherein the norbornene type addition copolymer has a ratio (Rd) of the repeating unit derived from a norbornene type monomer existing in form of a dimer in a range of 25% by mole or higher and a ratio (Rt) of the repeating unit derived from a norbornene type monomer existing in form of a trimer in a range of 20% by mole or lower.

**4.** The retardation film according to claim 1, 2 or 3,
wherein the norbornene type addition copolymer has a ratio (Rr) of a racemic modification in the repeating unit derived from a norbornene type monomer existing in form of a dimer in a range of 8% by mole or lower.

**5.** The retardation film according to claim 1, 2, 3 or 4,
wherein the acyclic olefin type monomer is a compound represented by the following formula (VI):

[Chem. 2]

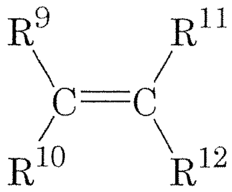

(VI)

in the formula, $R^9$, $R^{10}$, $R^{11}$ and $R^{12}$ represent hydrogen, a linear or branched alkyl group having 1 to 8 carbon atoms, or an aryl group having 6 to 18 carbon atoms.

**6.** The retardation film according to claim 1, 2, 3, 4 or 5,
wherein the acyclic olefin type monomer is an $\alpha$-olefin monomer.

**7.** The retardation film according to claim 1, 2, 3, 4, 5 or 6,
which further contains 0 to 10% by mole of a repeating unit derived from a monomer represented by the following formula (VII):

[Chem. 3]

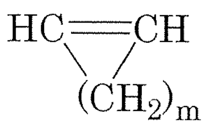

(VII)

in the formula, m represents an integer of 2 to 10.

**8.** The retardation film according to claim 1, 2, 3, 4 or 5,
wherein the norbornene type monomer is norbornene and the acyclic olefin type monomer is ethylene.

**9.** The retardation film according to claim 1, 2, 3, 4, 5, 6, 7 or 8,
wherein the norbornene type addition copolymer composition contains 100 parts by weight of the norbornene type addition copolymer and 0.01 to 3 parts by weight of at least one kind of lubricant selected from a group consisting

of a fatty acid ester compound, an amide compound, and a salt, having a long chain aliphatic hydrocarbon group.

**10.** A polarization plate,
which comprises a laminate of the retardation film according to claim 1, 2, 3, 4, 5, 6, 7, 8 or 9, and a polarization film or a polarizer.

**11.** A liquid crystal display,
which comprises the retardation film according to claim 1, 2, 3, 4, 5, 6, 7, 8 or 9, or the polarization plate according to claim 10.

[Fig. 1]

norbornene alone
(single monomer)

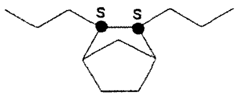

two continuous
norbornene monomers
(dimer)

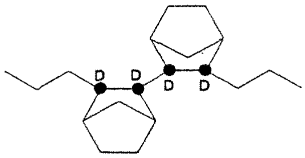

three continuous
norbornene monomers
(trimer)

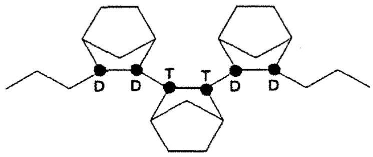

[Fig. 2]

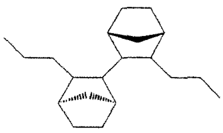

meso modification

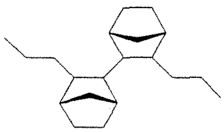

racemic modification

[Fig. 3]

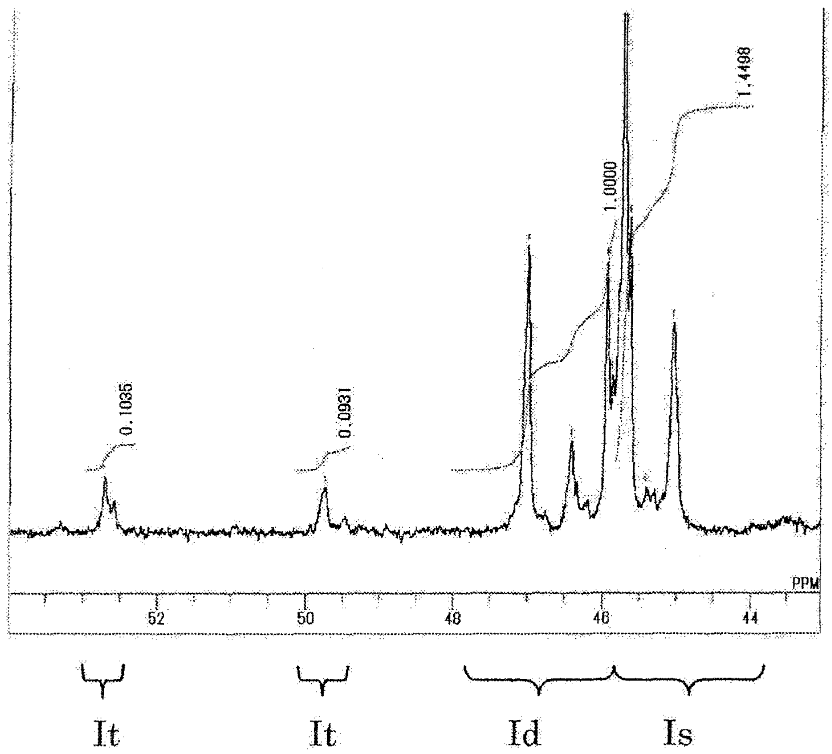

[Fig. 4]

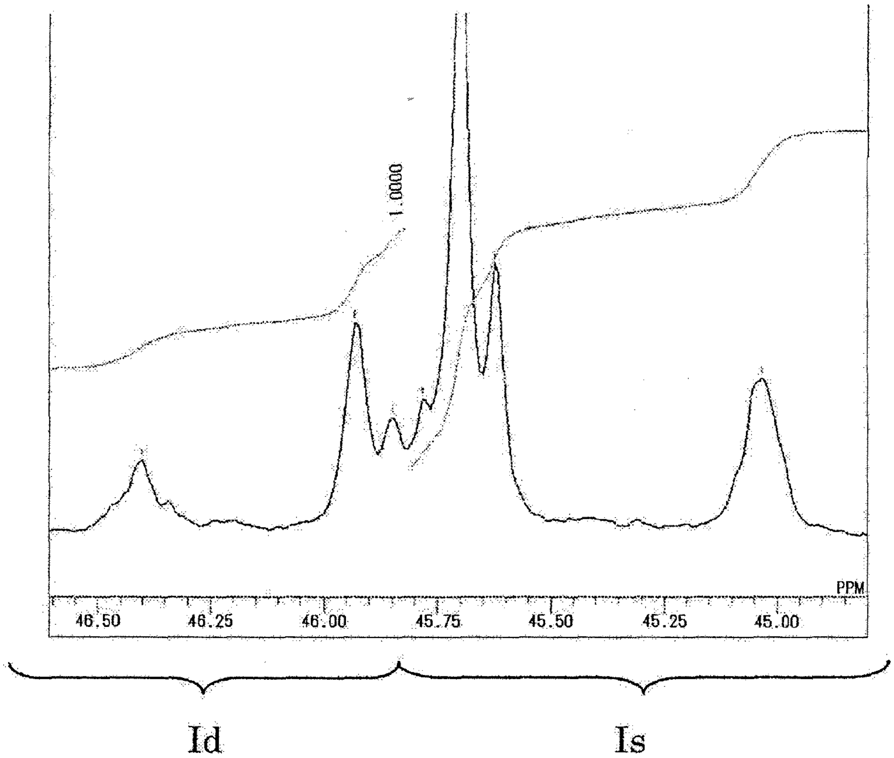
1.0000
PPM
46.50
46.25
46.00
45.75
45.50
45.25
45.00
Id
Is

[Fig. 5]

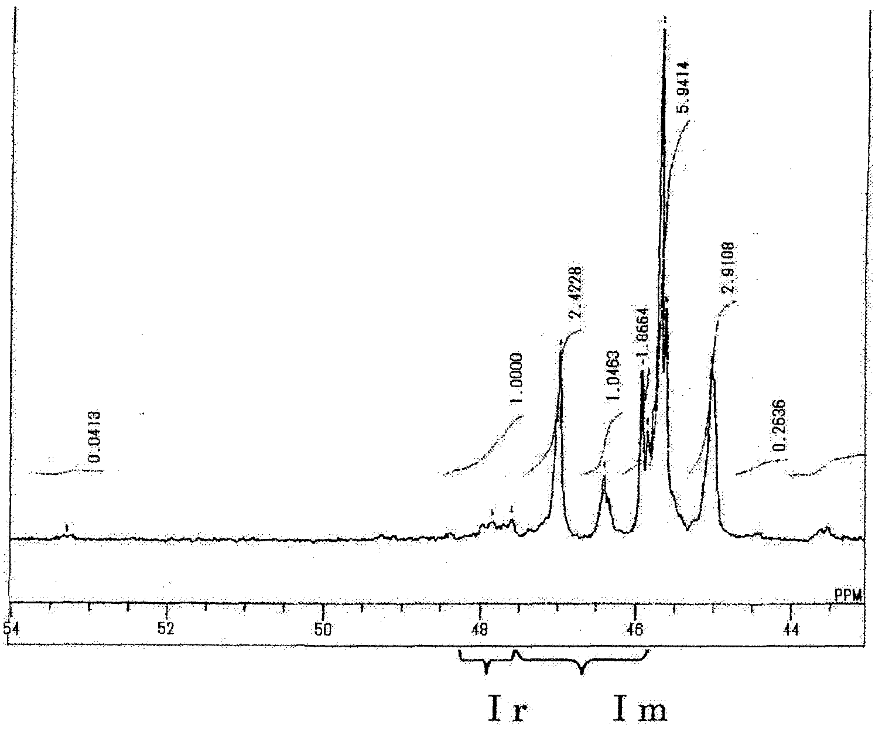
0.0413
1.0000
2.4228
1.0463
1.8664
5.9414
2.9108
0.2636
PPM
54
52
50
48
46
44
Ir
Im

[Fig. 6]

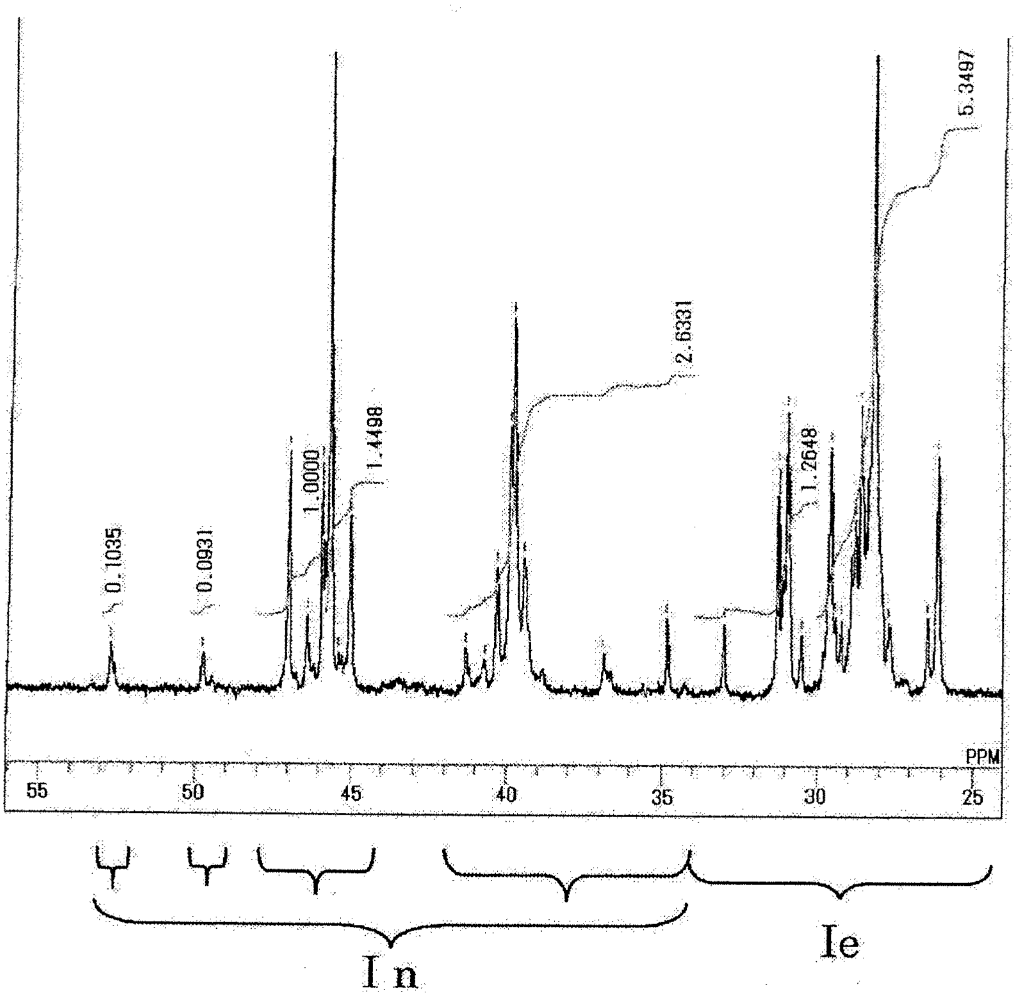
0.1035
0.0931
1.0000
1.4498
2.6331
1.2648
5.3497
PPM
55
50
45
40
35
30
25
I n
Ie

[Fig. 7]

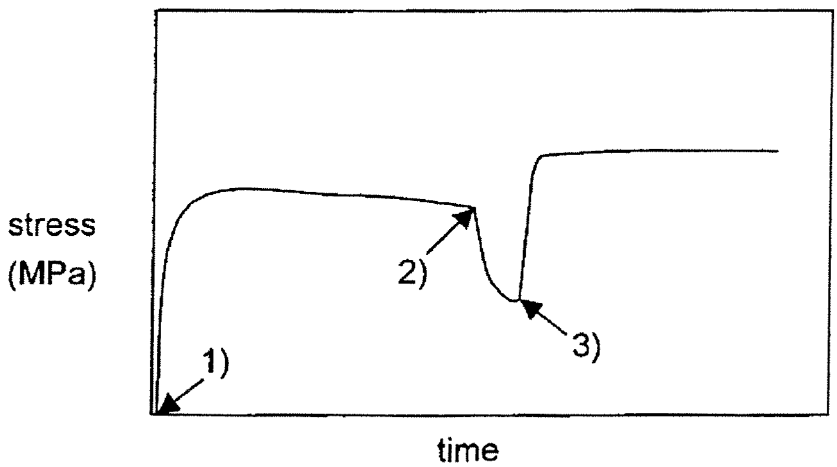
stress
(MPa)
1)
2)
3)
time

[Fig. 8]

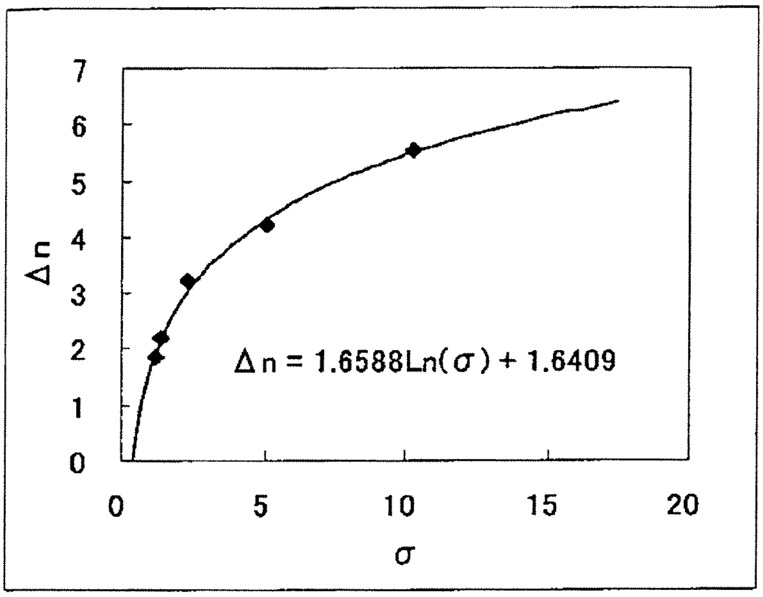

## INTERNATIONAL SEARCH REPORT

International application No.
PCT/JP2005/021599

A. CLASSIFICATION OF SUBJECT MATTER
*G02B5/30*(2006.01), *C08F210/00*(2006.01), *C08F232/08*(2006.01), *C08L45/00* (2006.01)

According to International Patent Classification (IPC) or to both national classification and IPC

B. FIELDS SEARCHED

Minimum documentation searched (classification system followed by classification symbols)
*G02B5/30*(2006.01), *C08F210/00*(2006.01), *C08F232/08*(2006.01), *C08L45/00* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 8-75921 A (Mitsui Petrochemical Industries, Ltd.), 22 March, 1996 (22.03.96), Full text; all drawings (Family: none) | 1-11 |
| A | JP 2001-194532 A (KANEKA Corp.), 19 July, 2001 (19.07.01), Full text (Family: none) | 1-11 |
| A | JP 2003-327618 A (Teijin Ltd.), 19 November, 2003 (19.11.03), Full text (Family: none) | 1-11 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 March, 2006 (15.03.06) | 04 April, 2006 (04.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/021599

C (Continuation). DOCUMENTS CONSIDERED TO BE RELEVANT

| Category* | Citation of document, with indication, where appropriate, of the relevant passages | Relevant to claim No. |
|---|---|---|
| P,X | WO 2006/030797 A1 (Teijin Ltd.), 23 March, 2006 (23.03.06), Full text (Family: none) | 1-11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3273046 B
- EP 0503422 A
- EP 0946618 A
- DE 224538
- DE 241971
- EP 0384694 A
- EP 0610814 A
- EP 0610815 A
- EP 0610816 A


### Non-patent literature cited in the description


- *Macromolecules,* 2000, vol. 33, 8931
- *Macromol. Chem. Phys.,* 2001, vol. 202, 3490